# EUROPEAN PATENT APPLICATION

(11) **EP 1 469 404 A1**
(43) Date of publication of application: **20.10.2004**
(21) Application number: 02793390.2
(22) Date of filing: 25.12.2002
(51) Int. Cl.: G06F 17/60

(54) **RIGHTS INFORMATION PROVIDING SYSTEM, METHOD AND COMPUTER PROGRAM FOR REALIZING THE SAME**

(30) Priority: 27.12.2001 JP 2001396760
(71) Applicant: Pia Corporation, Tokyo 102-0075 (JP)
(72) Inventor: GAKUHARI, Masahiro, Chiyoda-ku, Tokyo 102-0075 (JP); UCHIDA, Osamu, Chiyoda-ku, Tokyo 102-0075 (JP); ISHIMATSU, Noboru, Chiyoda-ku, Tokyo 102-0075 (JP); KATSUMATA, Syunsuke, Chiyoda-ku, Tokyo 102-0075 (JP)
(74) Representative: Betten & Resch
(86) International application number: PCT/JP2002/013533
(87) International publication number: WO 2003/056485

(57) **Abstract**

Electronic tickets, electronic coupons, or the like are provided to customers who visit stores selling merchandise or event halls, thereby attracting a large base of customers, improving the pulling power of the event hall, promoting the sales of merchandise, or the like.

A system for providing right information comprises memory means for storing a plurality of electronic tickets or coupons, and a management server (1) that includes the memory means.

The managing server (1) accepts information on a customer from an in-store terminal (2), performs a searching process for a predetermined electronic ticket or coupon based on the customer information, and provides the electronic ticket or coupon searched for to a user.

## Description

### TECHNICAL FIELD

The present invention relates to a system for providing an electronic ticket or an electronic coupon to a consumer, and a computer program therefore.

### BACKGROUND ART

In recent years, electronic tickets have been used which are admission tickets in electronic form for a concert, a movie, or the like. Also, electronic coupons have been used which are coupons in electronic form usable in various stores. Such electric tickets or electric coupons are substantially utilized as follows.
(1) An electronic ticket or an electronic coupon is stored in an IC card (or a portable telephone with a built-in IC chip, or the like).
(2) A user takes the IC card to a concert hall or a store.
(3) Contents of the IC card are read out by an information reader disposed on an admission gate of the concert hall or the store, and then contents of the electronic ticket or the electronic coupon are confirmed.
(4) This permits admission into the concert hall, discount sale of merchandise, or the like.

Thus, there is no need to use a ticket or a coupon which is printed on a paper, thereby saving troublesome procedures for issuing and mailing tickets or coupons to a large extent.

However, the conventional method of utilizing the electronic ticket or coupon has a problem that information is not sufficiently utilized. For instance, since most of IC cards have stored therein their owner's names or the like, when the information reader reads the contents of the IC card, information indicating who enters a concert hall, where the concert hall is, and what time the user enters the hall will be generated. Although this information is extremely useful for sales strategy and marketing of a company or the like, it is not actually used at all in the prior art method. This problem will be raised in use of the electronic coupon in the same way.

Accordingly, it is an object of the invention to provide a system and computer program suitable for use in information strategy of the company without wasting the foregoing information.

### DESCRIPTION OF THE INVENTION

The present invention relates to a system, method, and computer program having the following aspects, for example.
(1) A system for providing right information comprises memory means for storing a right information group composed of a plurality of pieces of right information which are provided to a user, and right information managing means that includes said memory means,
   wherein said right information managing means accepts customer information from customer management means for managing information about a customer, performs a searching process for predetermined right information from said right information group based on information included in the customer information, and provides said right information searched for to right receiving means for causing the user to receive a right.
(2) The store visit information includes user specifying information for specifying a user visiting a store, and said right information is provided to the user specified by said user specifying information.
(3) Said memory means includes a contact address of the user, and
   said right information managing means informs said contact address that the right information has been provided.
(4) Said right receiving means is yet-to-be-transmitted right information storage means for storing the right information before it is transmitted to carrying means for carrying the right information.
(5) Said customer information includes used-right information that is used by the user, and
   said searching process is to search for the right information that is more usable than said used-right information, from said right information group.
(6) The right information provided to said right receiving means is right information usable in the store used by the user.
(7) The right information provided to said right receiving means is right information usable in a subsidiary of the store used by the user.
(8) Said customer information includes prediction element information for predicting an action, and
   said searching process is to search for the right information about the action predicted based on said prediction element information, from said right information group.
(9) Said right information managing means provides said right information until a presupposed action for prediction, on which the predicted action is based, is completed.
(10) Said customer information includes inducing element information for inducing an action, and
   wherein said searching process is to search for the right information about the action to be induced based on said inducing element information, from said right information group.
(11) Said right information managing means provides said right information until a presupposed action for inducement, on which the action to be induced is based, is completed.

### BRIEF DESCRIPTION OF THE DRAWINGS

Fig. 1 is a schematical view of an apparatus to which the invention is applied;
Fig. 2 is a diagram showing a membership file;
Fig. 3 is a diagram showing a folder management file;
Fig. 4 is a diagram showing a screen for confirming and downloading the folder;
Fig. 5 is a diagram showing memory contents of an IC card;
Fig. 6 is a diagram showing store visit information;
Fig. 7 is a diagram showing a provided-right file;
Fig. 8 is a diagram showing a transmission right information;
Fig. 9 is a diagram showing a screen for confirming and downloading the folder;
Fig. 10 is a diagram showing memory contents of an IC card;
Fig. 11 is a diagram showing store visit information;
Fig. 12 is a diagram showing a provided-right file;
Fig. 13 is a diagram showing store visit information;
Fig. 14 is a diagram showing a provided-right file;
Fig. 15 is a diagram showing store visit information;
Fig. 16 is a diagram showing a provided-right file;
Fig. 17 is a diagram showing store visit information;
Fig. 18 is a diagram showing a provided-right file;
Fig. 19 is a diagram showing store visit information; and
Fig. 20 is a diagram showing a provided-right file.

### DESCRIPTION OF THE PREFERRED EMBODIMENTS

### [First Embodiment of the Invention]

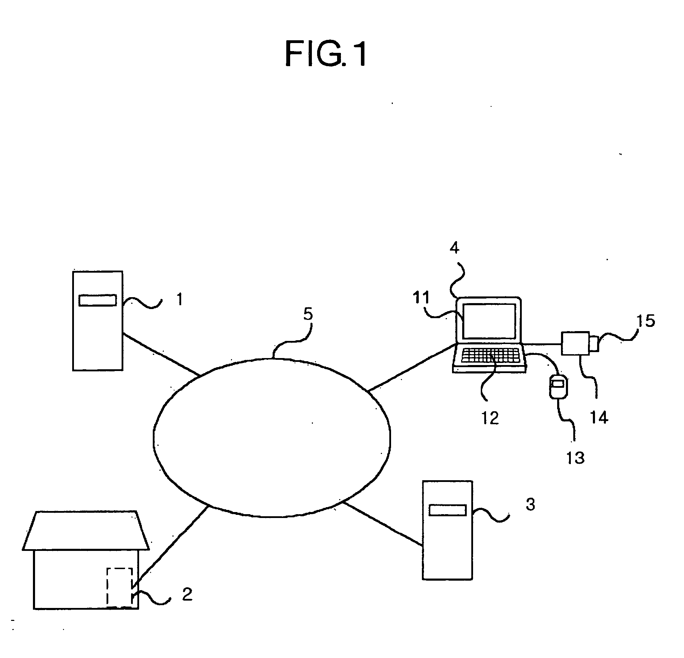

The first preferred embodiment of the invention will be explained with reference to the accompanying drawings. Fig. 1 is a schematic diagram showing hardware required to carry out the invention and its associated surroundings.

Such hardware is composed of a management server 1 (a server used by a company which manages right information), an in-store terminal 2 (a computer disposed in a store, an event hall, or the like), a receiving server 3 (a server for receiving the right information), and a PC 4 (a computer owned by a user).

The management server 1, the in-store terminal 2, the receiving server 3, and the PC 4 are connected to one another via Internet 5 (communicating means) so as to transmit and receive data therebetween.

The management server 1, the in-store terminal 2, the receiving server 3, and the PC 4 each have a memory for storing data, a data transmitter for transmitting data, and a data receiver for receiving data built in, and transmit and receive data using them.

Each memory has a computer program required to carry out the invention and predetermined data stored therein. Each foregoing device is given a command based on this computer program to process corresponding data, thereby carrying out the invention.

The in-store terminal 2 has a built-in reader/writer for reading and writing data stored in the IC card.

The PC 4 includes a display monitor 11 for displaying data, a keyboard for data input 12, a mouse 13, and a reader/writer 14 for reading and writing data from and in the IC card. Into the reader/writer 14, the IC card 15 may be inserted, so that the data is read and written.

It should be noted that the management server 1 functions as right information managing means, the in-store terminal 2 as customer managing means, the receiving server 3 as right receiving means, the IC card 15 as carrying means, the memory built into the managing server 1 as memory means, and the memory built into the receiving server 3 as yet-to-be-transmitted right information storage means.

Now, the outline of the present invention will be explained hereinafter. The invention is to provide the electronic ticket and/or the electronic coupon, or the like for customers who visit stores selling merchandise or event halls, thereby attracting a large base of customers, improving the pulling power of the event hall, and promoting the sales of merchandise, or the like.

Then, a condition (precondition) which is required to explain the preferred embodiment will be described below.

Mr. Kazuo Mita, who lives in Tbkyo, is a member of service concerning electronic tickets and coupons, which are provided by a company called Dream Company. The Dream Company deals in admission tickets of events, coupons of various stores, or the like, and recently handles electronic tickets or coupons. The electronic ticket or coupon is constituted by digitizing the contents of the admission ticket or the coupon. This is stored and carried in a portable telephone or the like with an IC card or IC chip built in, which provides a system in which a user carrying the ticket or coupon can enter the event hall or use the coupon. Mr. Mita, who is a member, owns an IC card 15 (see Fig.1) for storing electronic tickets and/or electronic coupons.

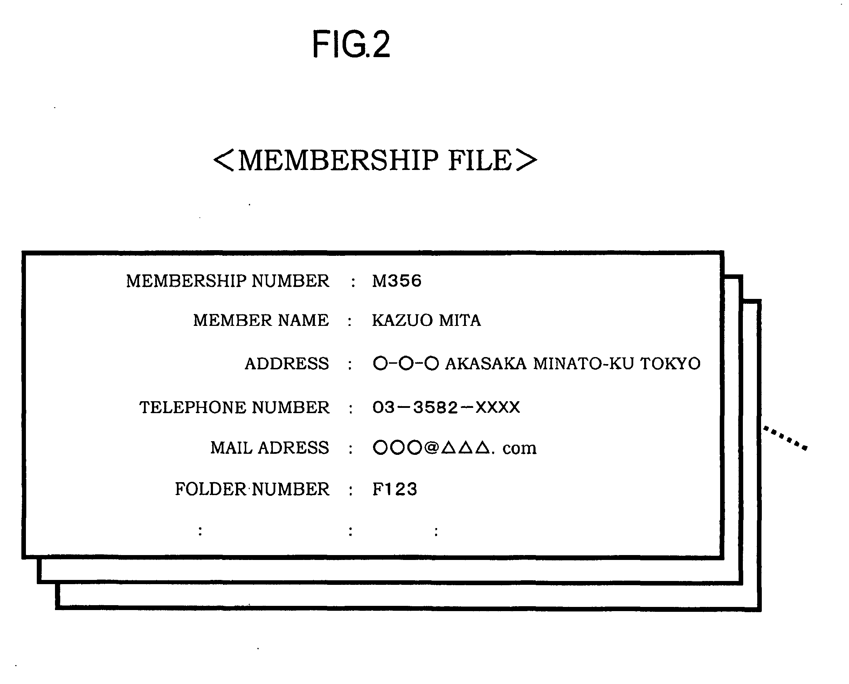

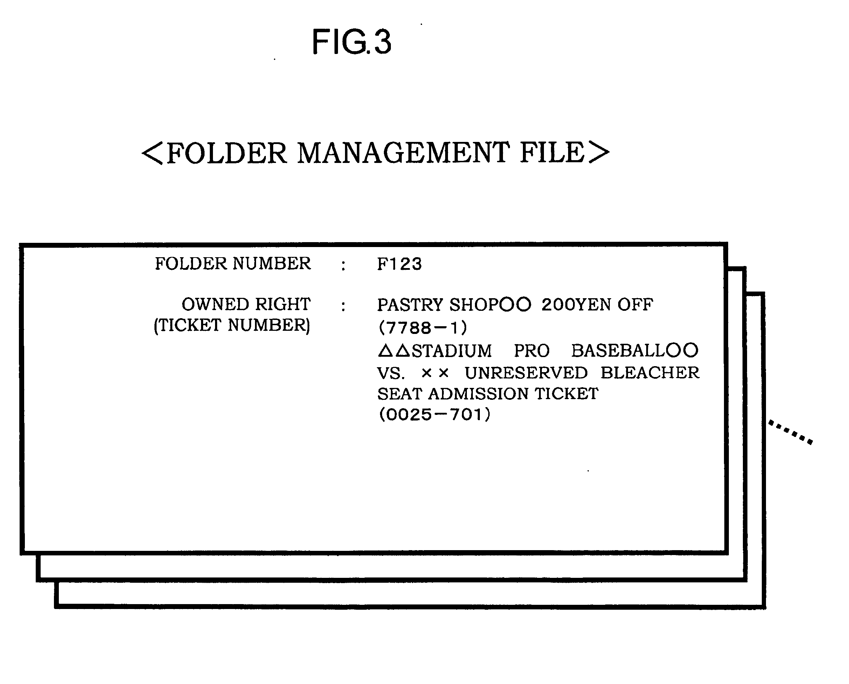

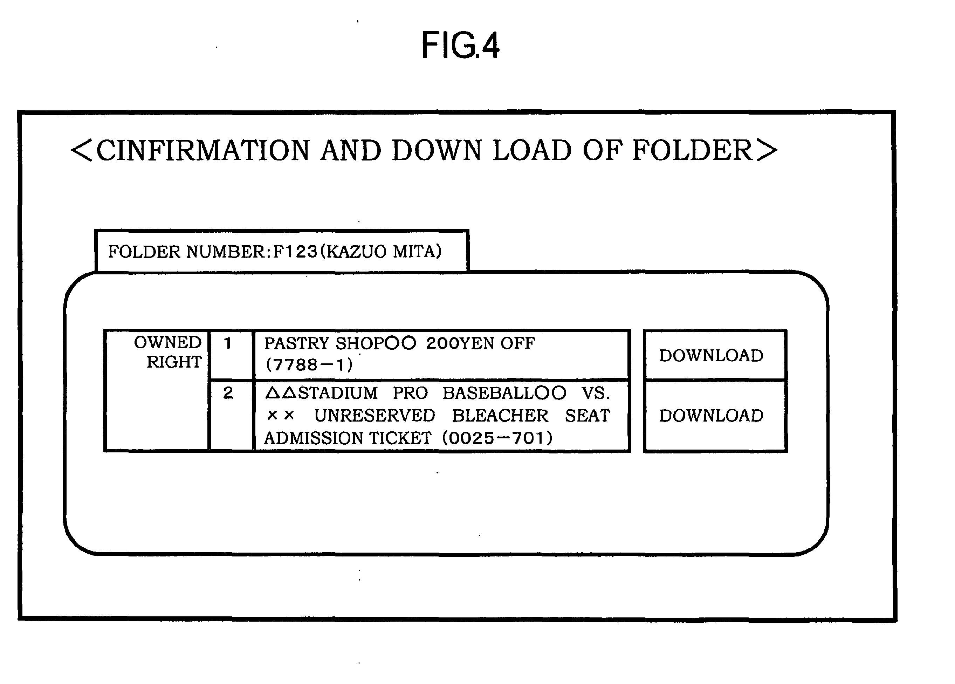

The management server 1 managed by the Dream Company stores therein a membership file (see Fig.2) composed of a plurality of membership records. As Mita's information, "Membership Number: M356/ Member Name: Kazuo Mita/ Address: o-o-o Akasaka Minato-ku Tokyo/ Telephone Number: 03-3582-XXXX/ Mail Address: ooo@ΔΔΔ.com/ Folder Number: F123/..." is stored. "Folder Number: F123" is a number to manage the electronic ticket and coupon owned by Mr. Mita. For example, when Mr. Mita owns the electronic coupon "Pastry Shop oo 200 yen off (7788-1)" and the electronic ticket "ΔΔ Stadium, pro baseball oo vs. xx unreserved bleacher seat admission ticket (0025-701)", "Folder Number: F123" is related (linked) to "Pastry Shop oo 200 yen off (7788-1)" and "ΔΔ Stadium, pro baseball oo vs. xx unreserved bleacher seat admission ticket (0025-701)" , which are stored in a folder management file stored in the receiving server 3 (see Fig. 3). When Mr. Mita uses the PC 4 to confirm contents of his/her own right, the display monitor 11 of the PC 4 displays the right contents in such a manner as that disclosed in Fig. 4, i.e., such that the ticket or coupon is included in the folder F123. Thus, contents of the owned ticket or the like are displayed in a folder format, thereby making it possible for a user (Mr. Mita) to easily confirm the contents.

Now, a processing procedure according to the present invention will be explained hereinafter. The invention is carried out in the following procedure. <Transmission of Customer Information: STEP 1> → <Right Information Search and Transmission: STEP 2> → <Right Information Downloading: STEP 3>. These steps will be described below.

### <Transmission of Customer Information: STEP 1>

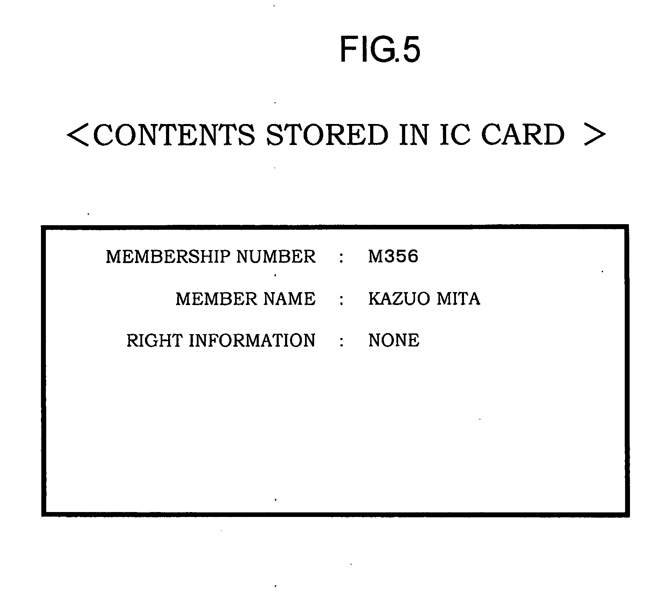

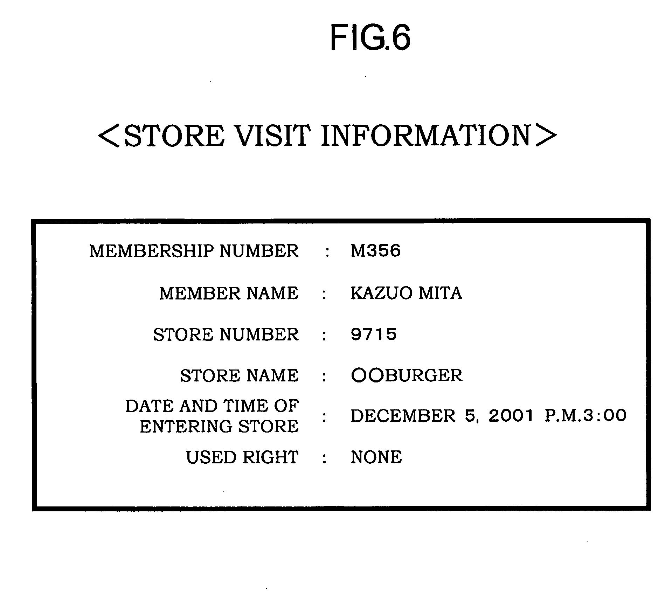

Mr. Mita enters a hamburger shop named "oo Burger" to have lunch. In this oo Burger shop, an in-store terminal 2 (see Fig. 1) is disposed. When he inserts an IC card into an IC card inlet of a reader/writer for the IC card which is disposed in the in-store terminal 2, an electronic coupon that will be usable the next time he comes to the shop, is transmitted into Mr. Mita's folder. It should be noted that Mr. Mita's IC card 15 pre-stores therein information including contents such as those shown in Fig. 5. When Mr. Mita is going to purchase a hamburger, he passes the IC card 15 to a clerk. Then, the clerk inserts the IC card 15 into the IC card inlet. Thus, the in-store terminal 2 reads out contents stored in the IC card 15. Based on the contents read, the in-store terminal makes store visit information shown in Fig. 6, for example, "Membership Number: M356/ Member Name: Kazuo Mita/ Store Number: 9715/ Store Name: oo Burger/ Date and Time of Entering Store: December 5, 2001, p.m. 3:00/ Used Right: None". It transmits or sends this store visit information to the management server 1. The server 1 receives the information, and then stores it in. Among this information, "Membership Number: M356/ Member Name: Kazuo Mita" are the contents that have been read from the IC card 15, and "Date and Time of Entering Store" is the information that has been read from a clock or the like built into the in-store terminal 2. The other information is one that has been pre-stored in the in-store terminal 2. It should be noted that, in the preferred embodiment, the membership number functions as user specifying information, and the store number as store specifying information. The used right will be described later.

### <Right Information Search and Transmission: STEP 2>

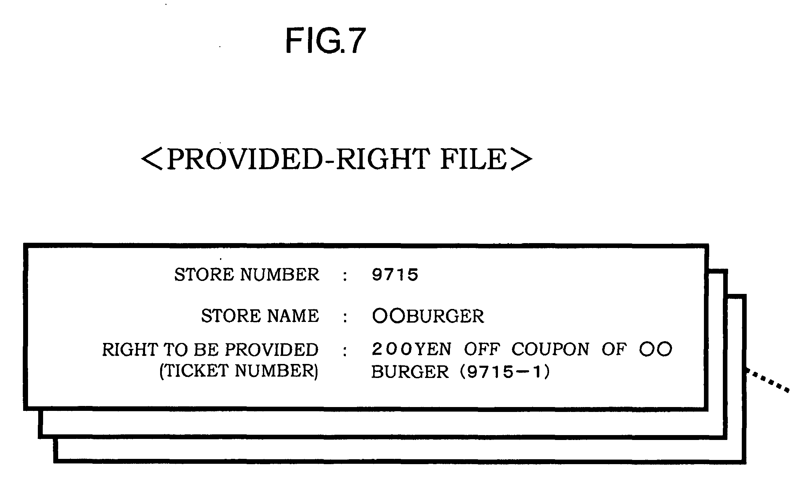

In the management server 1, a provided-right file such as that shown in Fig.7 is stored. This provided-right file is composed of a plurality of provided-right records, each of which relates (links) electronic coupon or ticket provided by each store (or each event hall) to the store number and the store name.

The management server 1 searches for or retrieves (carries out search processing) a provided-right file by designating the store visit information, namely, "Store Number: 9715" as a retrieval key. Accordingly, the provided -right record "Store Number: 9715/ Store Name: oo Burger/Right To be Provided (Ticket Number): 200 yen off coupon of oo Burger (9715-1)" is retrieved or found as shown in Fig. 7, thereby specifying a right to be provided. It should be noted that "200 yen off coupon (9715-1)" included in this provided-right records functions as right information, and the provided-right file including the plurality of pieces of right information as a right information group.

Then, the management server 1 searches through membership file by designating the store visit information, namely, "Membership Number: M356" as a retrieval key. Thus, Mr. Mita's membership record such as that shown in Fig. 2 is found, so that the management server 1 specifies Mr. Mita's "Folder Number: F123" and "Mail Address: ooo@ΔΔΔ.com".

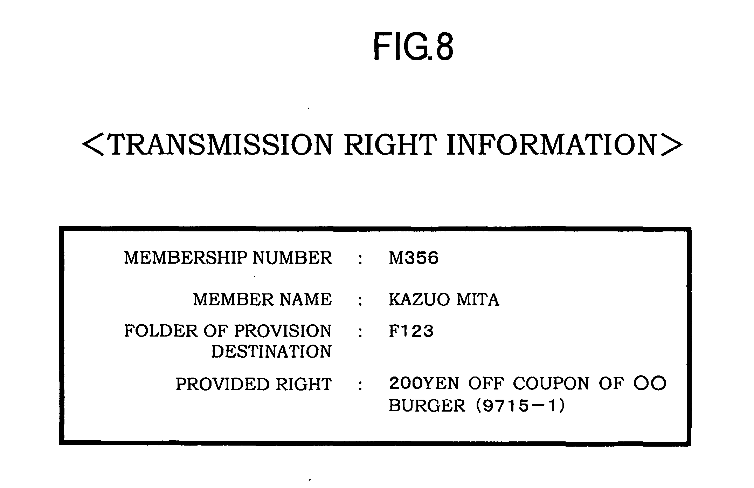

Next, the management server 1 makes or generates transmission right information, namely, "Membership Number: M356/ Member Name: Kazuo Mita/ Folder of Provision Destination: F123/ Provided Right: 200 yen off coupon of oo Burger (9715-1)", as shown in Fig. 8, based on the retrieved membership record, and the provided-right record, or the like, and then transmits it to the receiving server 3. This receiving server 3 stores this right information in its memory.

At the same time, the management server 1 sends a message that, e.g., "A new electronic ticket or coupon has been provided to your folder", to Mr. Mita's e-mail address "ooo@ΔΔΔ.com". It is noted that in the embodiment, the e-mail address functions as a contact address.

In the receiving server 3, as described above, is stored a folder management file such as that shown in Fig. 3. Such a folder management file is composed of a plurality of folder management records, each of which relates (links) the folder number to an owned right.

The receiving server 3 searches through the folder management file by designating the transmission right information "Folder of Provision Destination: F123" as a retrieval key. Thus, the folder management record "Folder Number: F123/ Pastry Shop oo 200 yen off (7788-1), ΔΔ Stadium, pro baseball oo vs. xx unreserved bleacher seat admission ticket (0025-701)" is found out as shown in Fig. 3. Then, the receiving server 3 adds the record "200 yen off coupon of oo Burger (9715-1)" (which is an electronic coupon included in the transmission right information shown in Fig. 8) to the folder management record (see Fig. 3). That is, "200 yen off coupon of oo Burger (9715-1)" is related (linked) to "Folder Number: F123" to be stored. As a result, Mr. Mita's folder management record has the contents of "Folder Number: F123/ Pastry Shop oo 200 yen off (7788-1), ΔΔ Stadium, pro baseball oo vs. xx unreserved bleacher seat admission ticket (0025-701), 200 yen off coupon of oo Burger (9715-1)(not shown)".

### <Right Information Downloading: STEP 3>

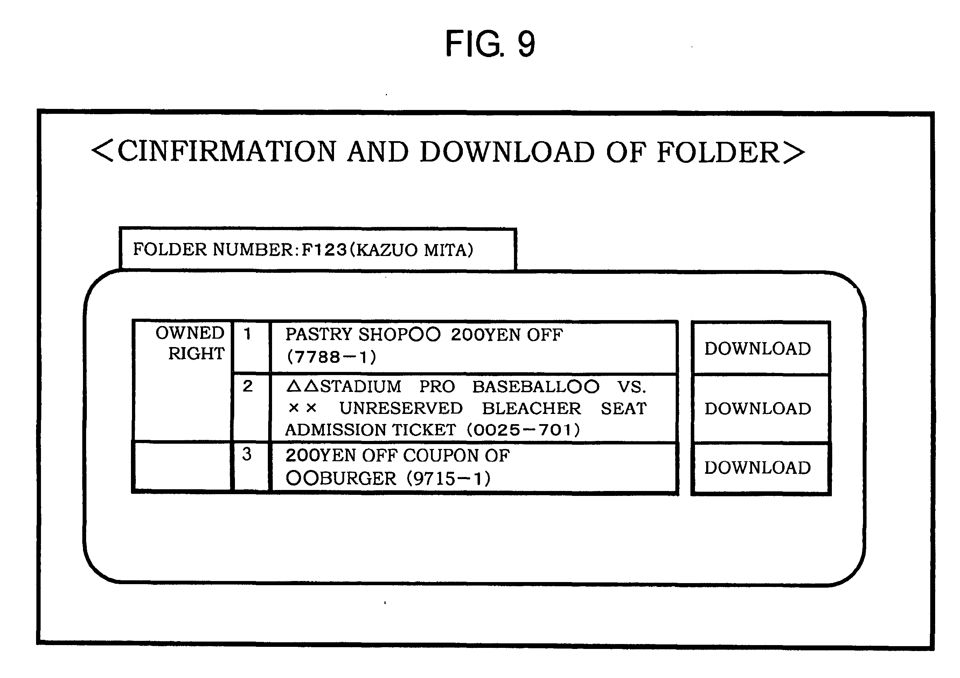

Mr. Mita returns home at night after having lunch at the oo Burger, and receives an e-mail using the PC 4. The received mail from the management server 1 includes a message that "A new electronic ticket or coupon has been provided". Mr. Mita gains access to a web page operated by the Dream Company so as to confirm and download the provided electronic ticket and/or coupon. After the information "Folder Number: F123" or a predetermined password is inputted and sent, the contents such as those shown in Fig. 9 will be displayed on a display screen 11 of the PC 4.

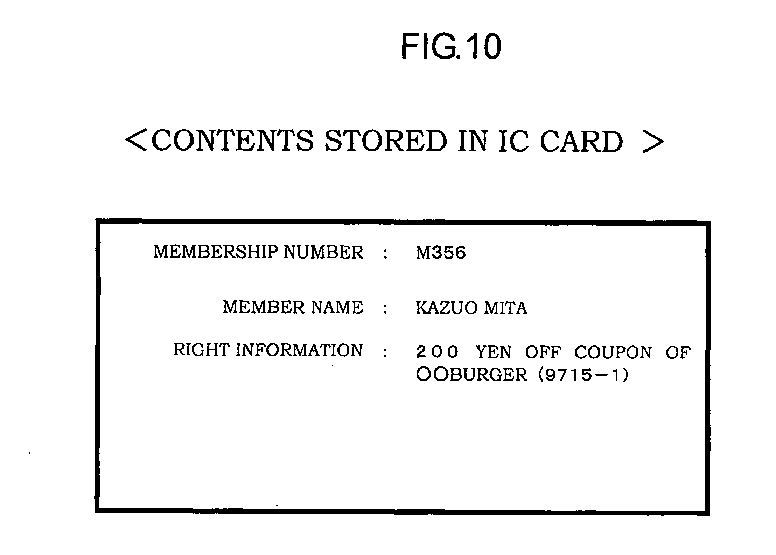

Because Mr. Mita is going to have a meal at the oo Burger next week, he clicks a "download" part which is located next to the "200 yen off coupon of oo Burger (9715-1)" part. Thus, the PC 4 makes downloading request information indicating "Ticket Number of Interest: 9715-1" (not shown), and transmits it to the receiving server 3. The server 3 receiving it sends an electronic coupon of "200 yen off coupon of oo Burger (9715-1)" to the PC 4, while cancels the transmitted ticket from the folder management record. The PC 4 receiving the electronic coupon stores the received electronic coupon in the IC card 15 via the reader/writer 14 for the IC card. Accordingly, downloading of right information is completed, so that the IC card 15 has stored therein the resultant contents such as those in Fig. 10.

After some days, Mr. Mita goes to the oo Burger, and passes the IC card 15 to a clerk or cashier in paying. When the clerk inserts the IC card 15 into the in-store terminal 2, the in-store terminal 2 reads out the contents of the electronic coupon, and then subtracts 200 yen from the total price, while canceling the electronic coupon "200 yen off coupon of oo Burger (9715-1)" stored in the IC card 15. This allows Mr. Mita to get discount of 200 yen off at the oo Burger.

The provision of the electronic coupon to the visiting customer (Mr. Mita) encourages the customer to visit the store (oo Burger) again, leading to increased sales of the oo Burger. That is, this enables attracting a large base of customers.

### [Second Embodiment of the Invention]

Although, in the foregoing first embodiment, a case where the electronic coupon usable in the store is provided has been described, a case where an admission ticket (electronic ticket) for a movie, a concert, or the like is provided will be explained in this embodiment. It should be noted that the present embodiment is similar to the first embodiment in most part thereof. That is, different points between this embodiment and the first embodiment are the contents of store visit information, and the contents of a provided-right file. The other remaining part of the present embodiment is substantially the same as that of the first embodiment. Now, the only different points will be described hereinafter.

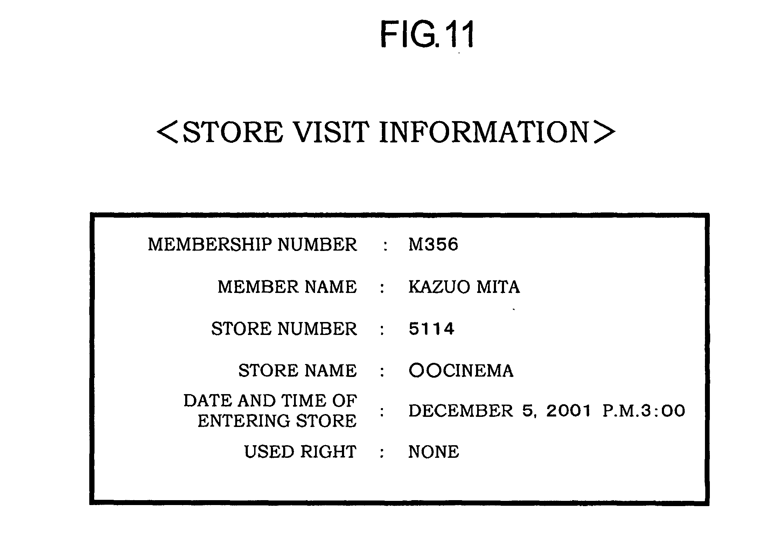

First, the contents of store visit information will be explained. The visit information in this embodiment has the following contents: "Membership Number: M356/ Member Name: Kazuo Mita/ Store Number: 5114/ Store Name: oo Cinema/ Date and Time of Entering Store: December 5, 2001, p.m. 3:00/ Used Right: None" as shown in Fig. 11. That is, when Mr. Mita is going to watch a movie at the oo Cinema, the in-store terminal 2 disposed at an entrance gate of the cinema reads out the contents of the IC card 15, and makes the store visit information based on the read contents.

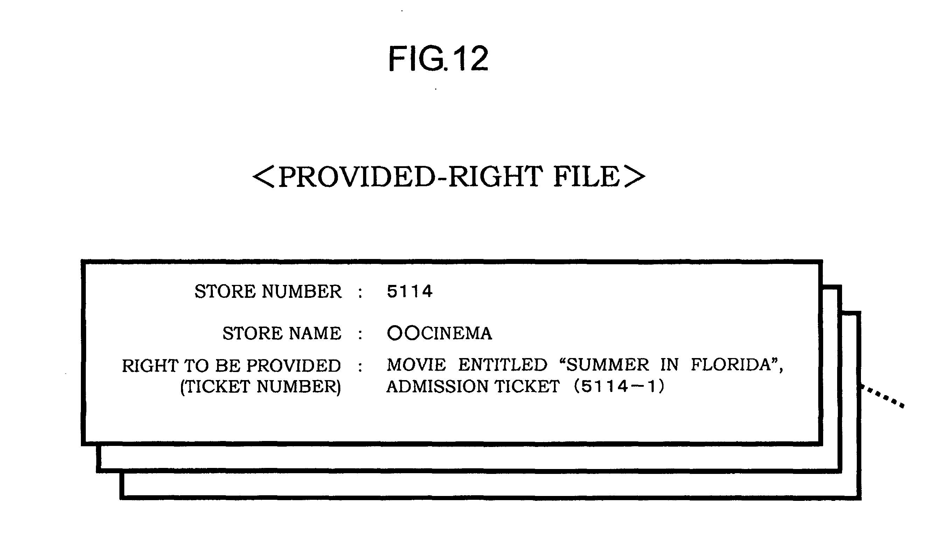

Now, the contents of the provided-right file will be explained. The provided-right file has the following contents: "Store Number: 5114/ Store Name: oo Cinema/ Right To be Provided (Ticket Number): Movie entitled "Summer in Florida", Admission Ticket (5114-1)" as shown in Fig. 12. That is, the right to be provided for Mr. Mita is an admission ticket for the movie entitled "Summer in Florida", which will be screened at the oo Cinema next month.

This electronic ticket is subjected to the same processing as that in the first embodiment, to be sent to the receiving server 3, and then downloaded (stored) into the Mita's IC card 15. This enables Mr. Mita to watch the "Summer in Florida" movie which will be screened at the oo Cinema next month, at a low price or at no charge. Thus, the present invention can handle not only coupons for stores selling merchandise, but also admission tickets for watching a movie, a concert, a sport, or the like. In short, the term "store" of the invention implies any providing places in a broad sense, such as a store selling merchandise, a store giving service, a hall where an event is held, and the like.

### [Third Embodiment of the Invention]

In the present embodiment, a case where Mr. Mita brings the electronic coupon, which is provided in the case of the first embodiment, to the oo Burger again, will be explained. The present embodiment is similar to the first embodiment in most part thereof. That is, different points between this embodiment and the first embodiment are the contents of store visit information, the contents of a provided-right file, and the contents of searching process performed by the management server 1. The other remaining part of the present embodiment is substantially the same as that of the first embodiment. Now, the only different points will be described hereinafter.

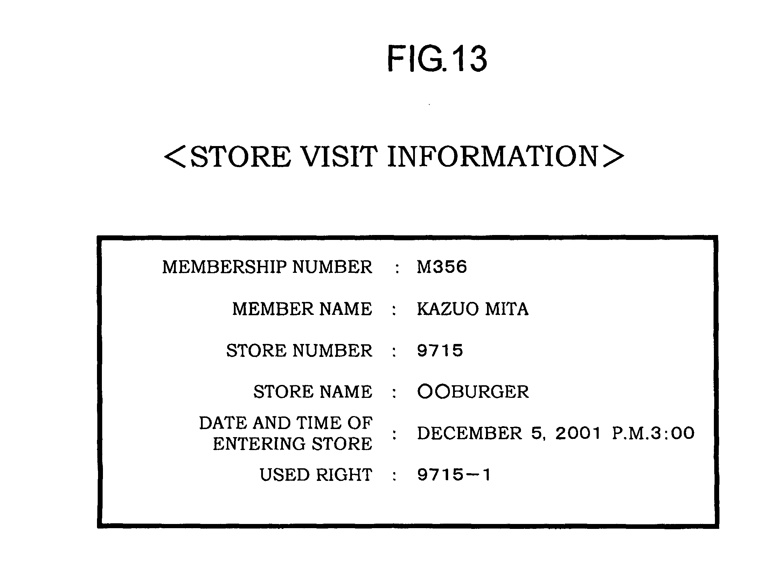

First, the contents of store visit information will be explained. The store visit information in this embodiment has the following contents: "Membership Number: M356/ Member Name: Kazuo Mita/ Store Number: 9715/ Store Name: oo Burger/ Date and Time of Entering Store: December 5, 2001, p.m. 3:00/ Used Right: 9715-1" as shown in Fig. 13. The different point between this embodiment and the first embodiment is that "Used Right" in the first embodiment is "none", but in this embodiment "9715-1". The used right means the electronic coupon (or electronic ticket) that has been used by Mr. Mita at the oo Burger. That is, the in-store terminal 2 of the oo Burger reads the electronic coupon from the IC card 15 storing the contents such as those as shown in Fig. 10, and adds it when making store visit information. It should be noted that in the present embodiment, the used right functions as used-right information.

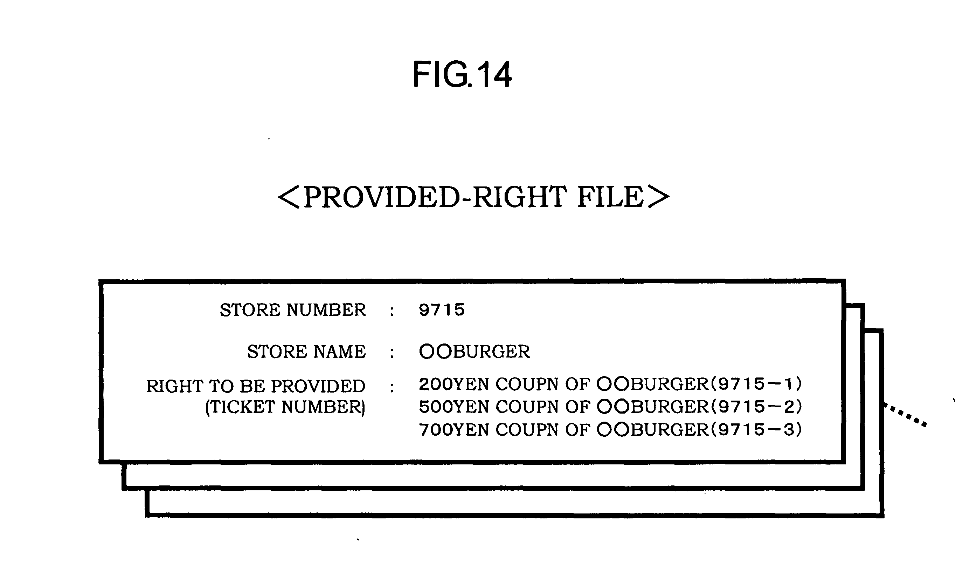

Next, the contents of the provided-right file will be explained. The provided-right file has the following contents: "Store Number: 9715/ Store Name: oo Burger/ Right To be Provided (Ticket Number): 200 yen off coupon of oo Burger (9715-1), 500 yen off coupon of oo Burger (9715-2), 700 yen off coupon of oo Burger (9715-3)", as shown in Fig. 14. The different point from the first embodiment is that a plurality of (three) rights are to be provided, which are stored in order of increasing value to a customer. In this embodiment, "500 yen off coupon of oo Burger (9715-2)", and "700 yen off coupon of oo Burger (9715-3)" serve as more valuable right information than the used right.

Now, the searching process performed by the management server 1 will be explained below. This process is substantially the same as that of the first embodiment, but different therefrom in the following point.

The used right of the store visit information is "9715-1". Thus, the management server 1 searches for a ticket corresponding to "9715-2", which is obtained by adding "1" to the foregoing "9715-1", and sets this ticket as a provided right of the transmission right information. That is, the management server 1 makes the transmission right information "Membership Number: M356/ Member Name: Kazuo Mita/ Folder of Provision Destination: F123/ Provided Right: 500 yen off coupon of oo Burger (9715-2)" (not shown), and transmits it to the receiving server 3. This coupon is subjected to the same processing as that of the first embodiment, to be downloaded into the Mita's IC card 15.

Providing again a customer with the electronic coupon that is more valuable than the used coupon enhances the possibility that the customer visits the store again, to thereby surely permit attracting a larger base of customers.

### [Fourth Embodiment of the Invention]

Although, in the first embodiment, the electronic coupon usable at the oo Burger is provided to the customer who has visited the oo Burger, a case where an electronic coupon usable at a subsidiary of the oo Burger is provided will be explained in this embodiment. The present embodiment is similar to the first embodiment in most part thereof. That is, different points between this embodiment and the first embodiment are the contents of store visit information, the contents of a provided-right file, and the contents of searching process performed by the management server 1. The other remaining part of the present embodiment is substantially the same as that of the first embodiment. Now, the only different points will be described hereinafter.

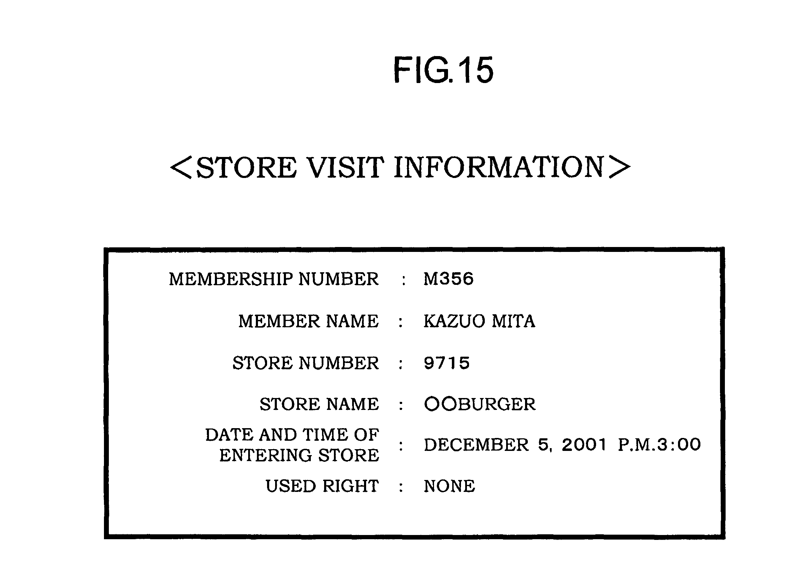

First, the contents of the store visit information will be explained. The store visit information in this embodiment has the following contents: "Membership Number: M356/ Member Name: Kazuo Mita/ Store Number: 9715/ Store Name: oo Burger/ Date and Time of Entering Store: December 5, 2001, p.m. 3:00/ Used Right: None" as shown in Fig. 15. This information is completely the same as that of the first embodiment.

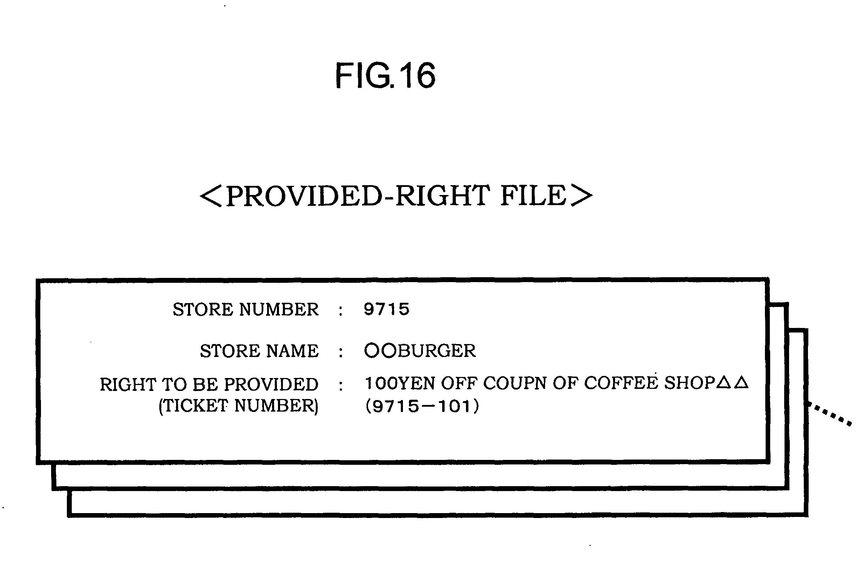

Next, the contents of the provided-right file will be explained. The provided-right file has the following contents: "Store Number: 9715/ Store Name: oo Burger/ Right To be Provided (Ticket Number): 100 yen off coupon of Coffee Shop ΔΔ (9715-101)", as shown in Fig. 16. The different point from the first embodiment is that the right to be provided is not the electronic coupon usable at the oo Burger, but the electronic coupon usable at the Coffee Shop ΔΔ (which is a subsidiary of the oo Burger). It should be noted that in the present embodiment, "100 yen off coupon of Coffee Shop ΔΔ (9715-101)" functions as the "right information usable in its subsidiary store".

If, based on this store visit information, the same searching process as that of the first embodiment and the other processing are carried out, Mr. Mita obtains the coupon, namely, "100 yen off coupon of Coffee Shop ΔΔ (9715-101)", leading to enhanced possibility that Mr. Mita visits the Coffee Shop ΔΔ. This succeeds in attracting a large base of customers to the subsidiary (one of group companies).

It should be noted that the "store" of the "subsidiary store" implies any providing places in a broad sense, for example, not only stores selling merchandise and giving service, but also halls or the like where events are held, as described above.

### [Fifth Embodiment of the Invention]

In the present embodiment, a case where a customer's action is predicted based on customer information, and then an electronic coupon or the like to conform to the predicted action is provided, will be explained. The present embodiment is similar to the first embodiment in most part thereof. That is, different points between this embodiment and the first embodiment are the contents of store visit information, the contents of a provided-right file, the contents of searching process performed by the management server 1, and the contents of transmission process of transmission right information. The other remaining part of the present embodiment is substantially the same as that of the first embodiment. Now, the only different points will be described hereinafter. In the case of the present embodiment, downloading of the electronic coupon or the like is not performed by the PC 4, but should be preferably performed by a portable compact computer, or a portable telephone with a built-in IC chip.

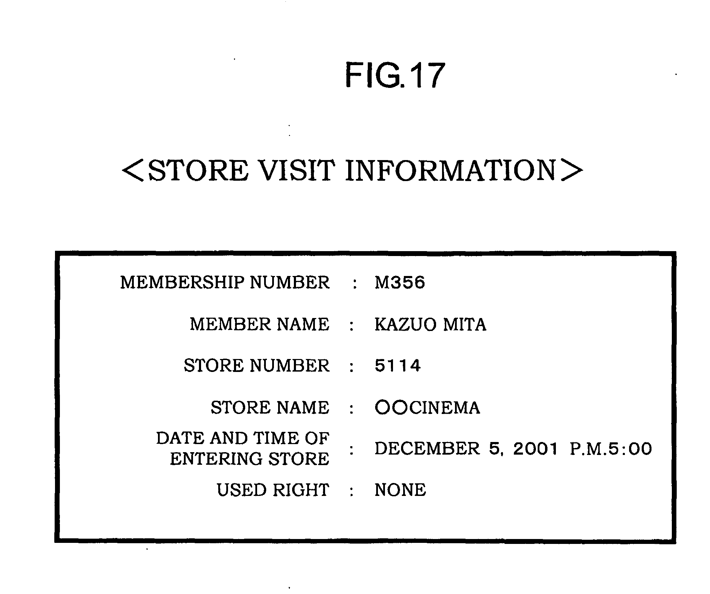

First, the contents of the customer information will be explained. The store visit information in this embodiment has the following contents: "Membership Number: M356/ Member Name: Kazuo Mita/ Store Number: 5114/ Store Name: oo Cinema/ Date and Time of Entering Store: December 5, 2001, p.m. 5:00/ Used Right: None", as shown in Fig. 17. This customer information is the same as that of the first embodiment. In the present embodiment, the date and time when the customer enters the store is the most important information. It should be noted that in the embodiment, the date and time of the customer's entering the store serves as prediction element information.

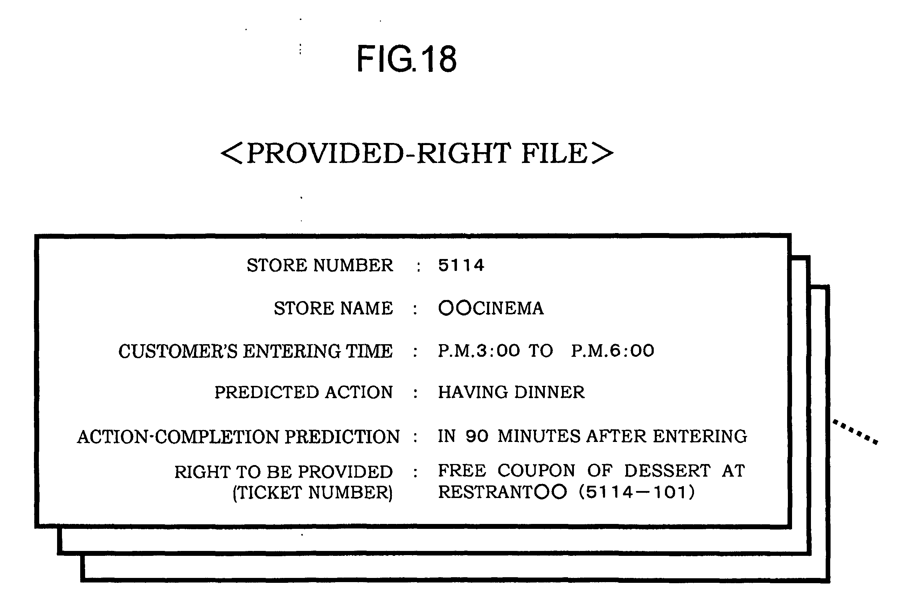

Next, the contents of the provided-right file will be explained. The provided-right file has the following contents: "Store Number: 5114/ Store Name: oo Cinema/ Customer's Entering Time: p.m. 3:00-6:00/ Predicted Action: having dinner/ Action-Completion Prediction: in 90 minutes after entering/ Right To be Provided (Ticket Number): Free Coupon of Dessert at Restaurant oo (5114-101)", as shown in Fig. 18. The different points from the first embodiment are that there are additionally provided data items including the entering time, the predicted action, and the action-completion prediction, and that the contents of the right to be provided are set based on the prediction "a customer who enters the cinema at p.m. 3:00 to p.m. 6:00 will have dinner after watching a movie". In the preferred embodiment, as a right to be provided is set an electronic coupon usable at the Restaurant oo, which is suitable for the dinner, e.g., "Free Coupon of Dessert at Restaurant oo (5114-101)". In the embodiment, this "Free Coupon of Dessert at Restaurant oo (5114-101)" coupon functions as "right information about the predicted action". Further, in the embodiment, "a presupposed action for prediction" corresponds to "an action of watching a movie", and "until the presupposed action for prediction is completed" corresponds to "by December 5, 2001, p.m. 6:30 (which time is obtained by adding action-completion prediction time (90 minutes after entering) to December 5, 2001, p.m. 5:00)". (Note that the invention is not limited to this case.)

Now, the searching process performed by the management server 1 will be explained below. This process is substantially the same as that of the first embodiment, but different therefrom in the following point.

The entering time in the customer information is "December 5, 2001, p.m. 5:00". Thus, the management server 1 searches for a provided-right record of interest from the provided-right file by designating "Store Number: 5114" and "Entering Time: p.m. 5:00" as retrieval keys. As a result, the provided-right record such as that shown in Fig. 18 is found out, and based on this record, transmission right information is made.

Now, transmission processing of the transmission right information to the receiving server 3, which processing is performed by the management server 1, will be explained below. This transmission process is substantially the same as that of the first embodiment, but different therefrom in the following point.

In the present embodiment, a customer's next action is predicted, and then an electronic coupon or the like to conform to the predicted action is provided. Therefore, if the electronic coupon to be provided does not reach a customer until the customer (Mr. Mita) leaves a cinema or a movie theater (that is, until the presupposed action for prediction is completed), it is meaningless. The timing of transmission is very important to transmission of the transmission right information according to the present embodiment. Hereinafter, the processing will be explained.

The entering time in the customer information corresponds to "December 5, 2001, p.m. 5:00", and the time when Mr. Mita will leave the cinema corresponds to "action-completion prediction: in 90 minutes after entering" (at earliest 90 minutes). Thus, the management server 1 calculates the transmission timing to obtain the result "from p.m. 5:00 to p.m. 6:30". During this time, the server 1 transmits the transmission right information to the receiving server 3. Accordingly, when Mr. Mita finishes watching the movie, the information "Free Coupon of Dessert at Restaurant oo (5114-101)" has been transmitted to the Mita's folder. Therefore, when Mr. Mita, who is just hungry after the movie, checks e-mails on his portable telephone or the like, a message that a new coupon has been provided is sent to the e-mail, thereby enhancing the possibility that Mr. Mita visits the Restaurant oo. This enables provision of the electronic coupon or the like that conforms to a customer's action, resulting in increased opportunities for the customer to use the electronic coupons and so on.

It should be noted that prediction of a next action may be carried out based on the user's sex, age bracket, the number of companions, or the like.

### [Sixth Embodiment of the Invention]

In the foregoing fifth embodiment, a customer's action is predicted, and the electronic coupon or the like to conform to the predicted action is provided. On the other hand, in the present embodiment, a case where an electronic coupon or the like to induce a customer's action is provided will be explained. The present embodiment is similar to the first embodiment in most part thereof. That is, different points between this embodiment and the first embodiment are the contents of store visit information, the contents of a provided-right file, and the contents of searching process performed by the management server 1. The other remaining part of the present embodiment is substantially the same as that of the first embodiment. Now, the only different points will be described hereinafter.

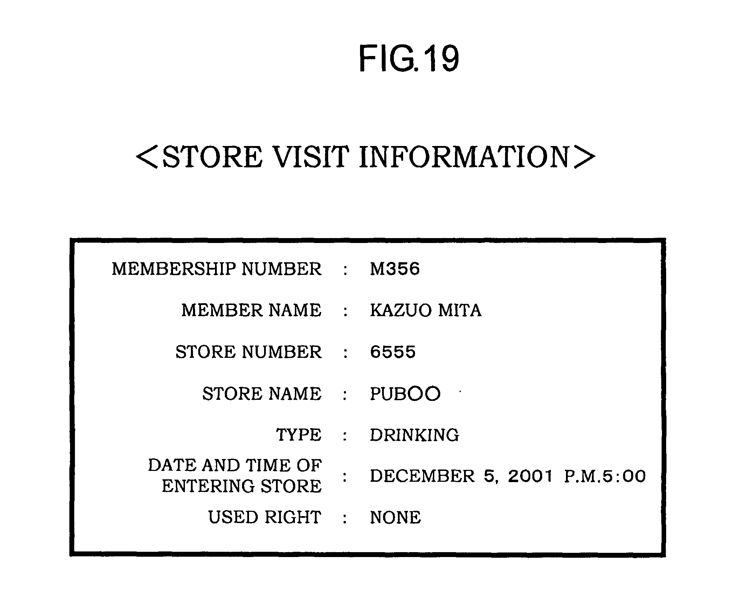

First, the contents of the customer information will be explained. The store visit information in this embodiment has the following contents: "Membership Number: M356/ Member Name: Kazuo Mita/ Store Number: 6555/ Store Name: Pub oo/ Type: drinking/Date and Time of Entering Store: December 5, 2001, p.m. 7:00/ Used Right: None", as shown in Fig. 19. This customer information differs from that of the first embodiment in that there is provided an item "Type: drinking". In this embodiment, this item "Type: drinking" functions as inducing element information.

Next, the contents of the provided-right file will be explained. The provided-right file has the following contents: "Store Number: 6555/ Store Name: Pub oo/ Type: drinking/ Action To be Induced: inducing the customer to go to Beef Bowl (which is called "Gyudon" in Japanese) Restaurant oo/Action-Completion Prediction: in 60 minutes after entering/ Right To be Provided(Ticket Number): 100 yen off coupon of Beef Bowl Restaurant oo (5114-201)". The different points from the first embodiment are that there are additionally provided data items including the type, the action to be induced, and the action-completion prediction, and that the contents of the provided right are set based on the following object of inducement: "although most people want to eat Chinese noodles after drinking alcohol, a coupon induces them to go to the Beef Bowl Restaurant". It should be noted that in the present embodiment, "100 yen off coupon of Beef Bowl Restaurant oo (5114-201)" functions as "right information about the action to be induced". Further, in the embodiment, "presupposed action for inducement" corresponds to "action of drinking and eating at the pub", and "until the presupposed action for inducement is completed" corresponds to "by December 5, 2001, p.m. 8:00 (which time is obtained by adding action-completion prediction time (60 minutes after entering) to December 5, 2001, p.m. 7:00)". (Note that the invention is not limited to this case.)

Now, the searching process performed by the management server 1 will be explained below. This searching process is substantially the same as that of the first embodiment, but different therefrom in the following point.

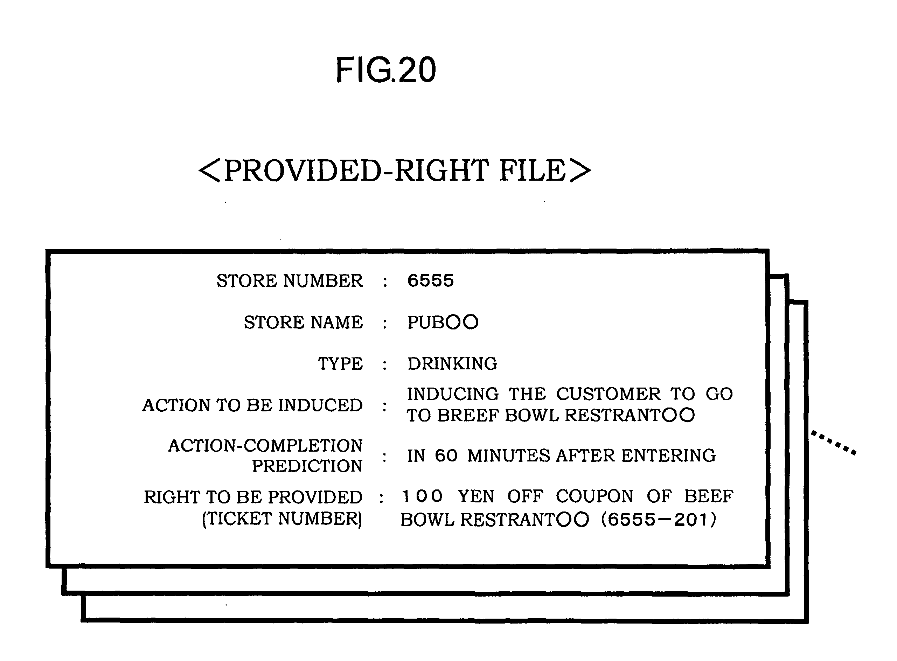

The type of the customer information (action type) is "drinking". Thus, the management server 1 searches for a provided-right record of interest from the provided-right file by designating "Store Number: 6555" and "Type: drinking" as retrieval keys. As a result, the provided-right record such as that shown in Fig. 20 is found out.

Now, transmission processing of the transmission right information to the receiving server 3, which processing is performed by the management server 1, will be explained below. This transmission process is substantially the same as that of the first embodiment, but different therefrom in the following point.

In the present embodiment, a customer's action is induced, and an electronic coupon or the like that conforms to the action to be induced is provided. Therefore, if the electronic coupon to be provided does not reach a customer until the customer (Mr. Mita) leaves the pub (that is, until the presupposed action for inducement is completed), it is meaningless. The timing of transmission is very important to transmission of the transmission right information according to the present embodiment. Hereinafter, the processing will be explained.

The entering date and time in the customer information corresponds to "December 5, 2001, p.m. 7:00", and the time when the customer will leave the pub corresponds to "action-start prediction: in 60 minutes after entering" (at earliest 60 minutes). Thus, the management server 1 calculates the transmission timing to obtain the result "from p.m. 7:00 to p.m. 8:00". During this time, the server 1 transmits the transmission right information to the receiving server 3. Accordingly, when Mr. Mita leaves the pub, the information "100 yen off coupon of Beef Bowl Restaurant oo (5114-201)" has been transmitted to the Mita's folder. Therefore, when Mr. Mita, who wants to eat Chinese noodles after leaving the Pub oo, looks at his portable telephone, an e-mail saying "An electronic coupon has been transmitted to your folder" reaches in the same manner as the fifth embodiment. Then, he downloads this new electronic coupon, so that the "100 yen off coupon of Beef Bowl Restaurant oo (5114-201)" coupon is sent to Mr. Mita. (That is, this coupon is stored in the IC chip of Mr. Mita's portable telephone, and its contents are displayed on a display screen of the phone.) This enhances the possibility of Mr. Mita's going to Beef Bowl Restaurant oo, not to a Chinese noodle restaurant, thereby permitting inducement of the customer's action. That is, a utilization rate of the electronic coupon or the like provided by the Dream Company will be increased.

It should be noted that although in the foregoing embodiments, specific cases have been explained, the invention is not limited thereto. For example, the following cases may be allowed.
(1) Although the electronic ticket for the movie and the electronic coupon provided at a hamburger shop have been explained in the foregoing embodiments, the electronic ticket or coupon according to the present invention may be usable in any event halls, any shops selling various merchandise or providing services, or the like.
(2) Although the electronic ticket or electronic coupon is sent to the yet-to-be-transmitted right information storage means in the foregoing embodiments, the electronic ticket or electronic coupon may be directly sent to right carrying means (means for carrying right information: for example, a portable telephone or a compact computer with an IC chip built·in).
(3) The contents of data are not limited to those of data explained in the foregoing embodiments. That is, any data will do as long as it has the same function.
(4) Hardware is not limited to one as explained in the foregoing embodiments. That is, any hardware will do as long as it has the same function. For example, the processing performed by the management server 1 and the processing performed by the receiving server 3 may be handled by only one server.
(5) The contents and procedure of the processing are not limited to those as explained in the foregoing embodiments. That is, any processing contents and processing procedure will do as long as they have the same functions.
(6) An expression "accept information (data)" means "receive information (data)". Note that the expression "accept information (data)" is not limited only to "receive information (data)". An expression "provide information (data)" means "transmit information (data)". Note that the expression "provide information (data)" is not limited only to "transmit information (data)".
(7) The term "customer" implies all customers or visitors in any case in a broad sense, for example, not only in the case of a customer's actually coming to a store, but also in the case of the customer's entering an event hall, inquiring of a store by a telephone, accessing a homepage, or the like.
(8) The data items of data record as presented in the foregoing embodiments are basically related (linked) to one another to be stored in the memory.
(9) The term "yet-to-be-transmitted right information storage means for storing right information before it is transmitted to the carrying means" implies the memory for storing (memorizing) the electronic ticket or the electronic coupon before it is downloaded via Internet into the portable telephone or the like with the IC card or IC chip built-in, which can carry the right information. Note that the invention is not limited to this case.

### INDUSTRIAL APPLICABILITY

The present invention has the following effects.
(1) The present invention provides customers visiting a store with electronic tickets or electronic coupons, thereby improving repeat customer rate (the probability of customer's visiting the store again), and attracting a large base of customers.
(2) Since the present invention provides electronic tickets or electronic coupons based on customer information, the electronic tickets or coupons provided conform to customer's needs and actions. This enables effective provision of electronic tickets or coupons, so that information generated when the electronic ticket or coupon is utilized can be sufficiently utilized.
(3) Provision of the electronic ticket or electronic coupon usable in a store where a customer visits leads to increased repeat customer rate. Thus, each store permits attracting a large base of customers.
(4) The electronic ticket or coupon to be provided is more usable than the used electronic ticket or coupon (used right), resulting in increased repeat customer rate.
(5) Provision of an electronic tickets or electronic coupons usable both in the store where the customer visits and in its subsidiary (one of group companies) permits attracting a large base of customers into the group companies.
(6) An action is predicted, and an electronic ticket or coupon that conforms to the predicted action is provided, thereby enhancing a utilization rate of the electronic ticket or coupon.
(7) Provision of an electronic ticket or coupon inducing a customer's action can improve the pulling power of a store in which the electronic ticket or coupon is usable.
(8) If the electronic ticket or coupon is not provided until a presupposed action for prediction or a presupposed action for inducement is completed, provision of the electronic ticket or coupon is meaningless, because it cannot be used. In the present invention, the electronic ticket or coupon is provided until a next action is started after customer information is received.
(9) The provision of the electronic ticket or coupon is informed a customer by an e-mail or the like, so that the customer may know that a new electronic ticket or the like is provided to his/her own folder.
(10) Since, in the present invention, the electronic ticket or coupon is transmitted to yet-to-be-transmitted right information storage means which is called customer's folder, application usage of the contents as disclosed in Japanese Patent Application No. 2001-037078, entitled "a system for transferring an electronic ticket, and a computer program for achieving same" can be further expanded.

## Claims

1. A system for providing right information, comprising:
memory means for storing a right information group composed of a plurality of pieces of right information which are provided to a user; and
right information managing means that includes said memory means,
wherein said right information managing means accepts customer information from customer management means for managing information about a customer, performs a searching process for predetermined right information from said right information group based on information included in the customer information, and provides said right information searched for to right receiving means for causing the user to receive a right.

2. The system for providing right information according to claim 1, wherein said customer information includes user specifying information for specifying a user visiting a store, and said right information is provided to the user specified by said user specifying information.

3. The system for providing right information according to claim 1 or 2, wherein said memory means includes a contact address of the user, and
wherein said right information managing means informs said contact address that the right information has been provided.

4. The system for providing right information according to any one of claims 1 to 3, wherein said right receiving means is yet-to-be-transmitted right information storage means for storing the right information before said information is transmitted to carrying means for carrying the right information.

5. The system for providing right information according to any one of claims 1 to 4, wherein said customer information includes used-right information that is used by the user, and
wherein said searching process is to search for the right information that is more usable than said used-right information, from said right information group.

6. The system for providing right information according to any one of claims 1 to 4, wherein the right information provided to said right receiving means is right information usable in the store used by the user.

7. The system for providing right information according to any one of claims 1 to 4, wherein the right information provided to said right receiving means is right information usable in a subsidiary of the store used by the user.

8. The system for providing right information according to any one of claims 1 to 4, wherein said customer information includes prediction element information for predicting an action, and
wherein said searching process is to search for the right information about the action predicted based on said prediction element information, from said right information group.

9. The system for providing right information according to claim 8, wherein said right information managing means provides said right information until a presupposed action for prediction, on which the predicted action is based, is completed.

10. The system for providing right information according to any one of claims 1 to 4, wherein said customer information includes inducing element information for inducing an action, and
wherein said searching process is to search for the right information about the action to be induced based on said inducing element information, from said right information group.

11. The system for providing right information according to claim 10, wherein said right information managing means provides said right information until a presupposed action for inducement, on which the action to be induced is based, is completed.

12. A computer program for providing right information, and which commands right information managing means to carry out processing, said managing means including memory means for storing a right information group composed of a plurality of pieces of right information which are provided to a user, said program comprising instructions for causing said right information managing means:
to accept customer information from customer management means for managing information about a customer;
to perform a searching process for predetermined right information from said right information group based on information included in the customer information; and
to provide said right information searched for to right receiving means for causing the user to receive a right.

13. The computer program for providing right information according to claim 12, wherein said customer information includes user specifying information for specifying a user visiting a store, and said right information is provided to the user specified by said user specifying information.

14. The computer program for providing right information according to claim 12 or 13, wherein said memory means includes a contact address of the user, and
wherein said program further comprises an instruction for causing said right information managing means to inform said contact address that the right information has been provided.

15. The computer program for providing right information according to any one of claims 12 to 14, wherein said right receiving means is yet-to-be-transmitted right information storage means for storing the right information before said information is transmitted to carrying means for carrying the right information.

16. The computer program for providing right information according to any one of claims 12 to 15, wherein said customer information includes used-right information that is used by the user, and
wherein said searching process is to search for the right information that is more usable than said used-right information, from said right information group.

17. The computer program for providing right information according to any one of claims 12 to 15, wherein the right information provided to said right receiving means is right information usable in the store used by the user.

18. The computer program for providing right information according to any one of claims 12 to 15, wherein the right information provided to said right receiving means is right information usable in a subsidiary of the store used by the user.

19. The computer program for providing right information according to any one of claims 12 to 15, wherein said customer information includes prediction element information for predicting an action, and
wherein said searching process is to search for the right information about the action predicted based on said prediction element information, from said right information group.

20. The computer program for providing right information according to claim 19, wherein said right information managing means provides said right information until a presupposed action for prediction, on which the predicted action is based, is completed.

21. The computer program for providing right information according to any one of claims 12 to 15, wherein said customer information includes inducing element information for inducing an action, and
wherein said searching process is to search for the right information about the action to be induced based on said inducing element information, from said right information group.

22. The computer program for providing right information according to claim 21, wherein said right information managing means provides said right information until a presupposed action for inducement, on which the action to be induced is based, is completed.

23. A method for providing right information, which causes right information managing means to carry out processing, said managing means including memory means for storing a right information group composed of a plurality of pieces of right information which are provided to a user, the method comprising causing said right information managing means to accept customer information from customer management means for managing information about a customer, to perform a searching process for predetermined right information from said right information group based on information included in the customer information, and to provide said right information searched for to right receiving means for causing the user to receive a right.

24. The method for providing right information according to claim 23, wherein said customer information includes user specifying information for specifying a user visiting a store, and said right information is provided to the user specified by said user specifying information.

25. The method for providing right information according to claim 23 or 24, wherein said memory means includes a contact address of the user, and further comprising the step of causing said right information managing means to inform said contact address that the right information has been provided.

26. The method for providing right information according to any one of claims 23 to 25, wherein said right receiving means is yet-to-be-transmitted right information storage means for storing the right information before said information is transmitted to carrying means for carrying the right information.

27. The method for providing right information according to any one of claims 23 to 26, wherein said customer information includes used-right information that is used by the user, and
wherein said searching process is to search for the right information that is more usable than said used-right information, from said right information group.

28. The method for providing right information according to any one of claims 23 to 26, wherein the right information provided to said right receiving means is right information usable in the store used by the user.

29. The method for providing right information according to any one of claims 23 to 26, wherein the right information provided to said right receiving means is right information usable in a subsidiary of the store used by the user.

30. The method for providing right information according to any one of claims 23 to 26, wherein said customer information includes prediction element information for predicting an action, and
wherein said searching process is to search for the right information about the action predicted based on said prediction element information, from said right information group.

31. The method for providing right information according to claim 30, further comprising the step of causing said right information managing means to provide said right information until a presupposed action for prediction, on which the predicted action is based on, is completed.

32. The method for providing right information according to any one of claims 23 to 26, wherein said customer information includes inducing element information for inducing an action, and
wherein said searching processing is to search for the right information about the action to be induced based on said inducing element information, from said right information group.

33. The method for providing right information according to claim 32, further comprising the step of causing said right information managing means to provide said right information until a presupposed action for inducement, on which the action to be induced is based, is completed.
